# EUROPEAN PATENT APPLICATION

(11) **EP 1 465 085 A2**
(43) Date of publication of application: **06.10.2004**
(21) Application number: 04008015.2
(22) Date of filing: 01.04.2004
(51) Int. Cl.: G06F 17/30

(54) **Transactionally consistent change tracking for databases**

(30) Priority: 01.04.2003 US 404229
(71) Applicant: MICROSOFT CORPORATION, Redmond, Washington 98052 (US)
(72) Inventor: Ward, Sandra L., Bellevue, Washington 98004 (US); Hollingsworth, John Matthew, Redmond, Washington 980520 (US)
(74) Representative: Grünecker, Kinkeldey, Stockmair & Schwanhäusser Anwaltssozietät

(57) **Abstract**

A change tracking technique is used to maintain the consistency of the source data with the destination data during transactional replication. A first functional characteristic is that it is a transactional database replication technique. A second characteristic is that the technique supports an incremental tracking of transactional states of the source system. A third characteristic of the technique is that it utilizes triggers to track changes while satisfying the first two characteristics.

## Description

### FIELD OF THE INVENTION

This invention relates in general to the field of database systems. More particularly, this invention relates to replication in database systems.

### BACKGROUND OF THE INVENTION

Database replication is a process by which data residing in data tables at one location (the source location) are made available for use at other locations (the destination locations). In particular, it is the process of keeping the destination data, which resides in tables, synchronized with the source data contained in the source tables, as changes to the source tables occur over time.

Transactional databases are databases that support changes to data in logical units of work known as transactions. A transaction persists the changes through a mechanism known as a commit. Prior to the commit, the data changes are not visible to other users of the transactional database. Conversely, a transaction can remove the ongoing changes that are being made prior to a commit, through a mechanism known as a rollback. All data visible on a transactional database represents the logical committed data state that exists at that point in time.

The data changes in a transaction can affect multiple tables and this transactional consistency among groups of tables is an important attribute of transactional databases. That is, through the use of transactions, it is possible to coordinate a state change that spans multiple database tables, so that from the perspective of the user, all tables are updated at the same time. Database applications frequently rely upon the transactional consistency of the underlying database tables that they access.

Transactional replication is a form of replication that moves the data changes from the source to the destination while preserving the transactional state of the source system such that the destination data always represents a distinct committed state of the source data. Transactional replication insures that the destination tables continue to reflect the transactional consistency of the replicated source tables. This can be contrasted with non-transactional replication systems which move the changes from the source to the destination and commit them in a way that does not guarantee that the state of the destination tables matches a particular transactional state of the data from the source tables.

Practical implementations of replication require an efficient algorithm for synchronizing the data state of the source tables with the destination tables. In its simplest form, transactional replication can be implemented to move the entire set of replicated data from the source to a destination each time the states between the databases are synchronized. Efficient transactional replication implementations often begin with this full synchronization of the initial state and proceed to track the incremental source database data changes, delivering only incremental updates to the destination databases during subsequent synchronizations.

The algorithms used for tracking data changes for database replication fall into two basic categories: log based and trigger based. Log based algorithms track the source database changes as they occur by reading the source database transaction log. The database transaction log contains all changes that have occurred on the database such that they can be ordered by the commit time. Algorithms for implementing replication change tracking that are based upon reading from the database log are efficient and provide a natural way to monitor state change on the source database.

Trigger based algorithms provide an alternative technique for tracking source database state changes during database replication. Database triggers are pieces of software code that can be executed based on a particular event that occurs within the database. Commercial databases often provide triggering events for inserts, updates, and deletes to table data. Replication triggers used for change tracking are constructed in such a way that an insert, update, or delete on each of the replicated tables causes the trigger code to execute which in turn stores information about the change that has occurred. This stored information is later used to determine the changes that must be applied to the destination tables in order for their state to reflect that of the source tables.

While trigger based algorithms are less efficient than log based algorithms, the technology to make use of triggers in change tracking is more widely available across database products than is the ability to extract changes from the database log. Moreover, triggers are implemented in a more consistent manner across database products than are log reading capabilities. Using triggers to track changes for replication can provide consistency among implementations when replication is provided across multiple database platforms. A traditional drawback to the use of triggers for replication change tracking is the difficulty for trigger based solutions to maintain the transactional characteristics necessary to support transactional replication. The present invention overcomes the limitations and drawbacks of the prior art and describes trigger based methods and systems for tracking changes when implementing a transactional replication solution.

### SUMMARY OF THE INVENTION

The present invention is directed to change tracking systems and methods used to maintain the consistency of the source data with the destination data during transactional replication. A functional characteristic in accordance with the present invention is that it is a transactional database replication technique. Another characteristic is that the technique supports an incremental tracking of transactional states of the source system. A further characteristic of the technique is that it utilizes triggers to track changes while satisfying the aforementioned characteristics.

Additional features and advantages of the invention will be made apparent from the following detailed description of illustrative embodiments that proceeds with reference to the accompanying drawings.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:
Figure 1 is a block diagram showing an exemplary computing environment in which aspects of the invention may be implemented;
Figure 2 is a flow diagram showing an exemplary flow of the processes of Figures 3-5;
Figure 3 is a flow diagram of an exemplary process of change detection in accordance with the present invention;
Figure 4 is a flow diagram of an exemplary process of grouping detected changes into consistent sets in accordance with the present invention;
Figure 5 is a flow diagram of an exemplary process of applying the changes associated with consistent sets to a destination database in accordance with the present invention;
Figure 6 is a diagram showing various exemplary tables that are desirably used in accordance with the present invention.

### DETAILED DESCRIPTION OF PREFERRED EMBODIMENTS

### Overview

The present invention provides an efficient trigger based mechanism for tracking changes that occur on a source database and applying the resulting change statements to a set of destination tables in a transactionally consistent manner. To better explain the subsequent embodiments, the following definitions are offered:

### Definitions

A set of changes associated with a group of database tables is said to be **transactionally consistent** with respect to those tables if, for any change in the set, all other changes associated with those tables and committed in the same transaction as the given change, are also in the set.

**A change tracking trigger** is a trigger applied to a source table that fires when insert, update, or delete operations are applied to the source table. The trigger is responsible for capturing the information about the change that is needed in order to apply the change to the destination table.

**A change tracking table** is a table used for storing an abstract representation of the changed data gathered when a change tracking trigger fires.

**A consistent set table** is a table used for grouping changes in the change tracking tables into sets that are transactionally consistent.

**A change statement** is a database modification statement, preferably Structured Query Language (SQL), that can be executed against a destination database to apply a source database change to the destination database.

### Exemplary Computing Environment

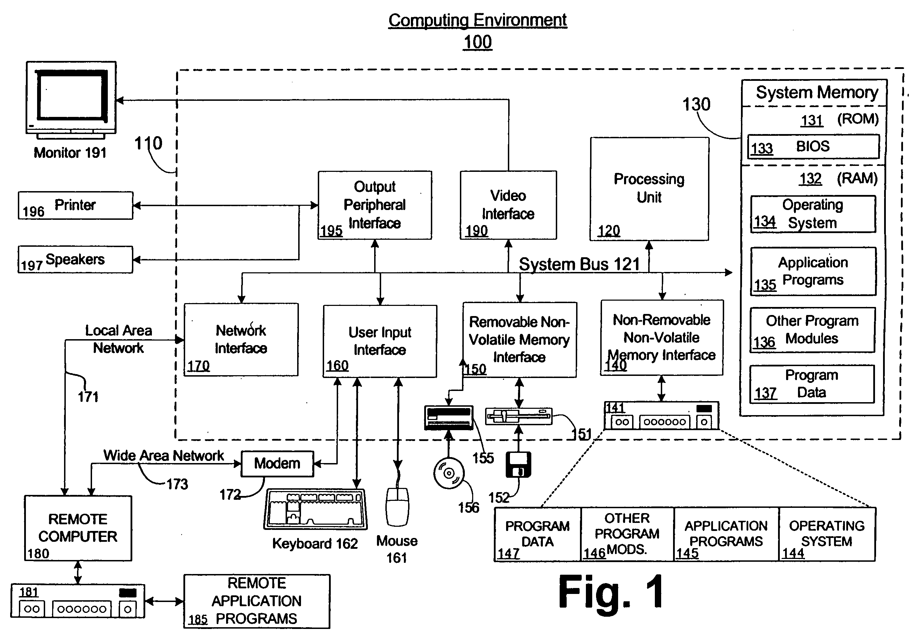

Figure 1 illustrates an example of a suitable computing system environment 100 in which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network or other data transmission medium. In a distributed computing environment, program modules and other data may be located in both local and remote computer storage media including memory storage devices.

With reference to Figure 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 110 typically includes a variety of computer readable media. Computer readable media can be any available media that can be accessed by computer 110 and includes both volatile and non-volatile media, removable and non-removable media. By way of example, and not limitation, computer readable media may comprise computer storage media and communication media. Computer storage media includes both volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or non-volatile memory such as ROM 131 and RAM 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Figure 1 illustrates operating system 134, application programs 135, other program modules 136, and program data 137.

The computer 110 may also include other removable/non-removable, volatile/non-volatile computer storage media. By way of example only, Figure 1 illustrates a hard disk drive 140 that reads from or writes to non-removable, non-volatile magnetic media, a magnetic disk drive 151 that reads from or writes to a removable, non-volatile magnetic disk 152, and an optical disk drive 155 that reads from or writes to a removable, non-volatile optical disk 156, such as a CD-ROM or other optical media. Other removable/non-removable, volatile/non-volatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media, discussed above and illustrated in Figure 1, provide storage of computer readable instructions, data structures, program modules and other data for the computer 110. In Figure 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Figure 1. The logical connections depicted include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Figure 1 illustrates remote application programs 185 as residing on memory device 181. It will be appreciated that the network connections shown are exemplary and other means of establishing a communications link between the computers may be used.

### Exemplary Distributed Computing Frameworks Or Architectures

Various distributed computing frameworks have been and are being developed in light of the convergence of personal computing and the Internet. Individuals and business users alike are provided with a seamlessly interoperable and web-enabled interface for applications and computing devices, making computing activities increasingly web browser or network-oriented.

For example, MICROSOFT®'s .NET platform includes servers, building-block services, such as web-based data storage and downloadable device software. Generally speaking, the .NET platform provides (1) the ability to make the entire range of computing devices work together and to have user information automatically updated and synchronized on all of them, (2) increased interactive capability for web sites, enabled by greater use of XML rather than HTML, (3) online services that feature customized access and delivery of products and services to the user from a central starting point for the management of various applications, such as e-mail, for example, or software, such as Office .NET, (4) centralized data storage, which will increase efficiency and ease of access to information, as well as synchronization of information among users and devices, (5) the ability to integrate various communications media, such as e-mail, faxes, and telephones, (6) for developers, the ability to create reusable modules, thereby increasing productivity and reducing the number of programming errors, and (7) many other cross-platform integration features as well.

While exemplary embodiments herein are described in connection with software residing on a computing device, one or more portions of the invention may also be implemented via an operating system, application programming interface (API) or a "middle man" object between a coprocessor and requesting object, such that services may be performed by, supported in, or accessed via all of NET's languages and services, and in other distributed computing frameworks as well.

### Exemplary Embodiments

As related to the present invention, the change tracking process monitors changes to the data in the source tables of interest, captures information about those changes, and groups the captured change data into consistent sets that are subsequently used to update the destination tables. An exemplary tracking mechanism of the present invention efficiently maintains a transactionally consistent copy at the destination.

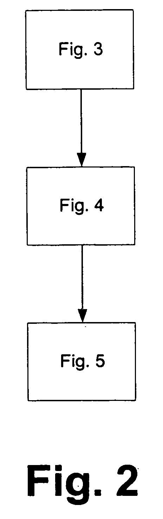

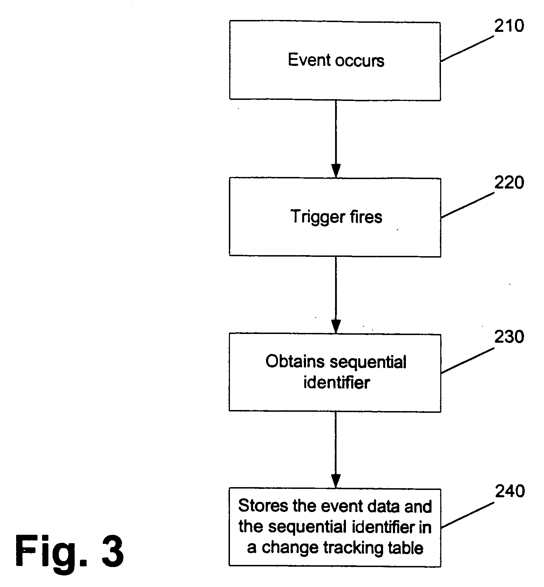

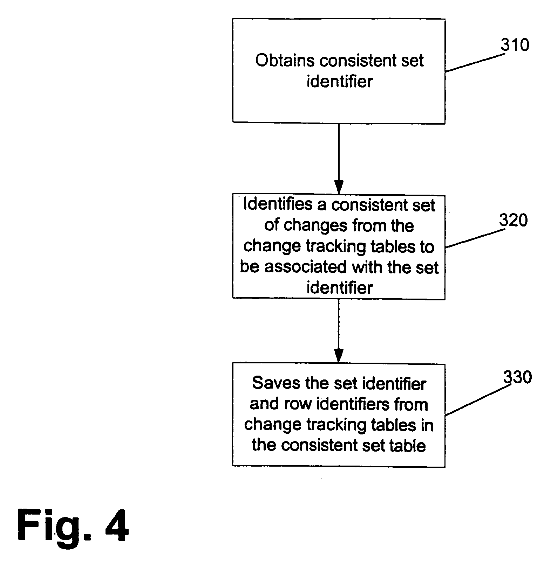

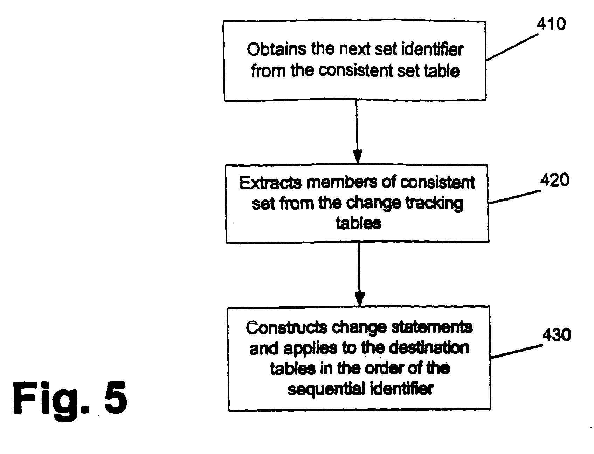

Figure 2 is a flow diagram showing an exemplary flow of the processes of Figures 3-5. Each of these processes desirably runs asynchronously with respect to the other processes, though it is contemplated that the process of Figure 3 is followed by the process of Figures 4 and 5, in turn, for a particular event.

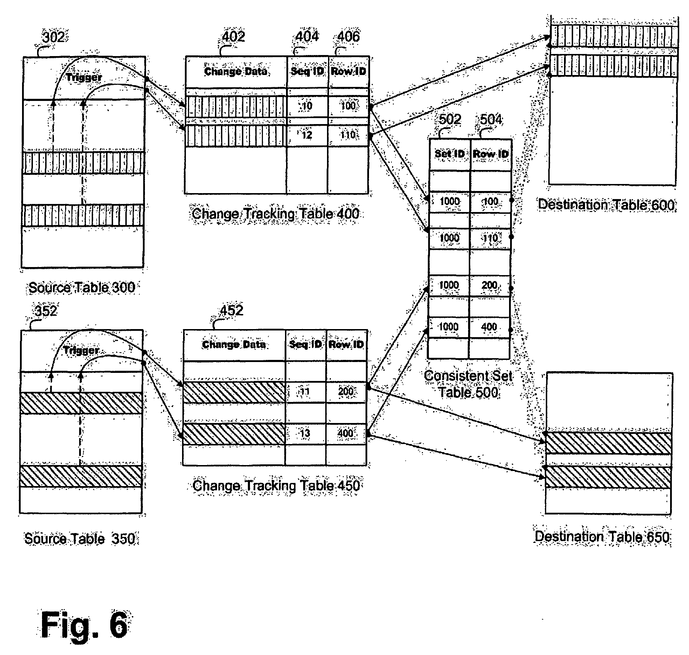

Figure 6 is a diagram showing various exemplary tables that are desirably used in accordance with the present invention. Figure 6 shows two source tables 300, 350, two change tracking tables 400, 450, a consistent set table 500 for identifying groups of consistent changes, and destination tables 600, 650. It is contemplated that any number of source tables, change tracking tables, consistent set tables and destination tables can be used in accordance with the present invention.

Figure 3 is a flow diagram of an exemplary process of change capture in accordance with the present invention. During setup, the source tables that are to be replicated in a transactionally consistent manner are identified, and one change tracking table is created for each source table. The change tracking tables are used to record details concerning the event activity (e.g., insert, update, and delete activity) that occurs on the rows of their associated source tables. Change tracking triggers are used to implement the change detection process. Trigger code is associated with each source table and executes when an event such as insert, update, or delete operation occurs on rows within the source table

In Figure 6, tracking triggers 302 and 352 are applied to source tables 300, 350. These triggers are used to capture the change data in tables 402, 452 and store that data in the appropriate tracking tables represented in 400, 450. Preferably, there is one tracking table per published table. It is noted that the change tracking tables desirably reflect only the changes that occur to their associated source tables. Thus, triggers 302, 352 are desirably placed on each published table 300, 350 and are used to write change information 402, 452 into the change tracking table(s) 400, 450.

In Figure 3 at step 210, an event occurs in which data is changed (e.g., an insert, update, or delete is applied to a source table), thereby causing the source table's associated change tracking trigger (e.g., Figure 6 triggers 302 or 352) to execute, at step 220. A sequential identifier is generated at step 230 which allows later processing to order this change relative to other changes. Preferably, the generated identifier is a strictly monotonically increasing number. The sequential identifier and event data (e.g., 402) are stored in the change tracking table (e.g., 400) that is associated with the source table (e.g., 300), at step 240. In particular, each row of event data 402, 452 that is stored in a change tracking table by a change tracking trigger has an associated sequential identifier (e.g., Seq ID 404).

The event data captured by the trigger includes data needed to construct a database statement that, when applied to the destination database, will bring the destination table to the same state as the source table. For an insert operation, the new column values are preferably entered into the change tracking table along with its operation type (insert) and sequential identifier. For a delete operation, the old column values are preferably entered into the change tracking table along with its operation type (delete) and sequential identifier. For an update operation, both old and new column values are preferably entered into the change tracking table along with its operation type (update) and sequential identifier.

Figure 4 is a flow diagram of an exemplary process of grouping changes into consistent sets in accordance with the present invention. During setup, a consistent set table is created. The consistent set table 500 is used to relate entries in the change tracking tables 400, 450 to specific consistent sets of changes with respect to a transactional point in time on the source database. The consistent sets define the changes in the change tracking tables that will be grouped together and applied as a single transaction to the destination database. At step 310, a sequential identifier is obtained for the set, which is used to order the sets when they are applied to the destination tables. At step 320, the entries in the change tracking tables are grouped to obtain a consistent set of changes to associate with this set identifier. At step 330, the information identifying specific changes as belonging to this consistent set is saved in the consistent set table.

When identifying a consistent set, identifiers for each row are obtained for all committed tracking table entries not previously assigned to a set. The row identifiers are saved in the consistent set table 500, along with the set identifier.

Figure 5 is a flow diagram of an exemplary process of applying the changes associated with consistent sets to destination tables in accordance with the present invention. An exemplary process extracts the changes from the change tracking tables and uses them to create the change statements to be used when changing the state of the destination database. The change statements associated with the same set identifier are preferably committed as a single transaction at the destination, allowing transactional consistency to be maintained.

Referring to Figure 5, step 410, the consistent set table is queried to determine the next set identifier to process. In step 420, each source table's associated change tracking table is queried to retrieve the changes related to the consistent set table with this set identifier. For each selected entry in the change tracking table, an appropriate change statement is generated and applied to the associated destination table (Figure 6, 600 and 650) in step 430. Desirably, all the entries made to the destination tables are then committed. During this process, the Figure 6 triggers represented by items 302 and 352 continue to store data in the change tracking tables 400, 450 to be later processed as members of subsequent sets.

In Figure 5, step 430, the change statements associated with a consistent set are applied to the destination tables, using the sequential identifiers from the entries in the change tracking table in Figure 6, items 400 and 450 to order the changes. Subsequent consistent sets are applied to the destination ordered by Set ID (Figure 6, 502). If new entries appear in the change tracking tables while changes are being extracted for a given set, the new entries will not appear in consistent set table 500 with the current set identifier, and thus will not be extracted as part of the current set.

In summary, by grouping changes into consistent sets of changes that are applied at the destination within a single transaction, transactional consistency with respect to a point in time of the source database is maintained at the destination database.

As mentioned above, while exemplary embodiments of the present invention have been described in connection with various computing devices and architectures, the underlying concepts may be applied to any computing device or system in which it is desirable to provide replication. Thus, the techniques for replication in accordance with the present invention may be applied to a variety of applications and devices. While exemplary programming languages, names and examples are chosen herein as representative of various choices, these languages, names, and examples are not intended to be limiting.

The various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. Additionally, any storage techniques used in connection with the present invention may invariably be a combination of hardware and software.

While the present invention has been described in connection with the preferred embodiments of the various figures, it is to be understood that other similar embodiments may be used or modifications and additions may be made to the described embodiment for performing the same function of the present invention without deviating therefrom. Furthermore, it should be emphasized that a variety of computer platforms, including handheld device operating systems and other application specific operating systems are contemplated, especially as the number of wireless networked devices continues to proliferate. Still further, the present invention may be implemented in or across a plurality of processing chips or devices, and storage may similarly be effected across a plurality of devices. Therefore, the present invention should not be limited to any single embodiment, but rather should be construed in breadth and scope in accordance with the appended claims.

## Claims

1. A method of maintaining a transactionally consistent group of tables at a destination database, comprising:
capturing a plurality of changes from a source database;
grouping the changes into at least one consistent set; and
applying at least one consistent set of changes to the destination database.

2. The method of claim 1, wherein capturing the plurality of changes comprises:
for each of a plurality of events:
recognizing a database event;
firing a trigger responsive to the event;
generating an identifying number for the event; and
storing data related to the event and the identifying number in a change tracking table as a change.

3. The method of claim 2, wherein grouping the changes comprises:
identifying the plurality of consistent sets of changes, and
storing information to recover the consistent sets in a consistent set table.

4. The method of claim 1, wherein each consistent set comprises a portion of the plurality of changes, and for each change in the portion, all other changes to source tables committed in the same transaction are also in the set.

5. The method of claim 1, wherein applying the change statements to the destination database comprises:
extracting a set of changes from change tracking tables based upon membership in a consistent set; and
applying the set of changes to the destination database in one transaction

6. The method of claim 1, wherein the steps of capturing, grouping, and applying are asynchronous.

7. The method of claim 1, wherein each change corresponds to an event, the event being one of an insert, update, and delete on data in a source database.

8. A computer-readable medium having stored thereon computer-executable instructions for performing a method of maintaining a transactionally consistent set of destination tables at a destination database, comprising:
capturing a plurality of changes from a source database;
grouping the changes into at least one consistent set;
applying at least one consistent set of changes to the destination database.

9. The computer-readable medium of claim 8, wherein capturing the plurality of changes comprises:
for each of a plurality of events:
recognizing a database event;
firing a trigger in response to the event;
generating an identifying number for the event; and
storing data related to the event and the identifying number in a change tracking table as a change.

10. The computer-readable medium of claim 9, wherein grouping the changes comprises:
identifying the plurality of consistent sets of changes, and
storing information to recover the consistent sets in a consistent set table.

11. The computer-readable medium of claim 8, wherein each consistent set comprises a portion of the plurality of changes, and for each change in the portion, all other changes to source tables committed in the same transaction are also in the set.

12. The computer-readable medium of claim 8, wherein applying the change statements to the destination database comprises:
extracting a set of changes from change tracking tables based upon membership in a consistent set; and
applying the set of changes to the destination database in one transaction

13. The computer-readable medium of claim 8, wherein the steps of capturing, grouping, and applying are asynchronous.

14. The computer-readable medium of claim 8, wherein each change corresponds to an event, the event being one of an insert, update, and delete on data in a source database.

15. A system for maintaining transactional consistency between source tables in a source database and destination tables in a destination database, comprising:
at least one source table having an associated trigger, the trigger executing in response to an event, each source table associated with the source database;
at least one change tracking table for recording data related to the change event; and
a consistent set table to group the entries of at least one change tracking table into at least one ordered consistent set.

16. The system of claim 15, wherein each of the source tables has at least one corresponding change tracking table.

17. The system of claim 15, wherein the change tracking table is populated with data related to the event and an identifying number for the event in response to the trigger executing.

18. The system of claim 17, wherein the entries are grouped into consistent sets of changes.

19. The system of claim 15, wherein for a plurality of events corresponding to changes, each consistent set comprises a portion of the plurality of changes, and for each change in the portion, all other changes to source tables committed in the same transaction are also in the portion.

20. The system of claim 15, wherein the change tracking table comprises at least one change to be applied to the destination database.

21. The system of claim 15, wherein data is extracted from the change tracking tables based on membership in a consistent set of changes identified via the consistent set table.

22. The system of claim 21, wherein a set of extracted changes is applied to the destination database in one transaction.
